# EUROPEAN PATENT SPECIFICATION

(11) **EP 1 101 385 B1**
(45) Date of publication and mention of the grant of the patent: **19.03.2008**
(21) Application number: 99943532.4
(22) Date of filing: 23.07.1999
(51) Int. Cl.: H04Q 7/38, G01S 5/06

(54) **Method for measuring the time of arrival of a radio signal, and apparatus therefor.**
Verfahren zur Ankunftszeitmessung eines Funksignals, und Vorrichtung dafür.
Procédé de mesure du moment d'arrivée d'un signal radio, et dispositif correspondant.

(30) Priority: 27.07.1998 US 123201; 28.09.1998 US 162079
(43) Date of publication of application: 23.05.2001
(60) Divisional application: 06022757.6
(73) Proprietor: TELEFONAKTIEBOLAGET LM ERICSSON (publ), 164 83 Stockholm (SE)
(72) Inventor: LARSSON, Erik, SE-756 48 Uppsala (SE); KANGAS, Ari, S-115 22 Stockholm (SE); FISCHER, Sven, D-90408 Nürenberg (DE); LUNDQVIST, Patrik, Cary, NC 27513 (US)
(74) Representative: Kühn, Friedrich Heinrich
(86) International application number: PCT/SE1999/001307
(87) International publication number: WO 2000/007404

(56) References cited:
- WO-A-95/26510
- WO-A-99/09778
- DE-A- 4 409 178
- US-A- 5 327 144

## Description

### FIELD OF THE INVENTION

The invention relates generally to locating the position of a mobile communication unit in a wireless communication network and, more particularly, to uplink time of arrival measurements.

### BACKGROUND OF THE INVENTION

The ability to locate the position of a mobile communication unit operating in a wireless communication system provides many well known advantages. Exemplary uses of such position locating capability include security applications, emergency response applications, and travel guidance applications. Among several possible techniques for providing position locating capability, uplink time of arrival (TOA) techniques are attractive because they normally do not require any changes to the mobile communication units.

One example of an uplink time of arrival approach will now be described with respect to the Global System for Mobile Communication (GSM), which is exemplary of a wireless communication system in which uplink time of arrival techniques are applicable. When an external application (ortheGSM network itself) decides to locate the position of a mobile unit (also referred to as mobile station), a Mobile Location Center forces (via a base station controller) the mobile unit to perform a conventional intracell handover, whereupon the mobile unittransmits up to 70 uplink access bursts, oneburst per TDMA frame (i.e., one burst every 8 timeslots). The mobile unittransmits the access bursts in an attempt to comply with the intracell handover command.

The Mobile Location Center (MLC) orders a numberofTOA Measurement Units (TMUs) to capture the access bursts and measure the time of arrival of each burst at each TMU. The TMUs then provide the MLC with theirtime of arrival measurements and reliability estimates for these measurements. In order to compute the position of the mobile station, theMLC uses the time of arrival values and corresponding reliability parameters, the geographic location coordinates of the TMUs, and inform ation regarding time differences among the respective internal time bases of the TMUs. For example, each TMU can be provided with an absolute time reference (e.g., a Global Positioning System (GPS) clock), in which case the TMUs are all synchronized together, so that relative time differences among the TMUs are not a factor in the MLC's calculation of the position of the mobile station.

However, if the TMUs do not include an absolute time reference, then the relative differences among their respective local time references can be determined, for example, by having each TMU measure the time of arrival of an uplink burst from a stationary reference mobile station positioned at a known location in the network. The time of arrival information for the reference mobile station is then transmitted from the TMUs to the MLC. The MLC can use these time of arrival measurements to compute the relative differences in the tim ing references of the respective TMUs, also referred to as inter-TMU time differences (ITTDs).

More specifically, because the MLC knows the location of the reference mobile station and also knows the locations of the TMUs, the MLC can easily calculate the expected difference (in absolute time) between the time of arrival of the burst at a first TMU and the time of arrival of the burst at a second TMU. Then, when the MLC receives the time of arrival information as actually observed at the first and second TMUs, it can compare the difference between observed arrival times to the expected difference as previously calculated. By this comparison, the actual time difference between the local time references of the first and second TMUs (the ITTD ofthe first and second TMUs) can be readily determined. Time of arrival measurements on the reference mobile station can be made periodically by the TMUs, and provided to the MLC for use in determining the ITTDs, so that MLC can maintain an updated record of the ITTDs.

In addition to the technique described above, other conventional techniques are also available for determining the ITTDs.

Because the MLC knows the ITTDs (or alternatively knows that the TMUs are all synchronized by a GPS system), it can calculate an estimate ofthe position of a given mobile station from the time of arrival information provided by the TMUs, using conventional Time Difference of Arrival (TDOA) techniques.

One problem with the above-described uplink time of arrival techniques is that the TMUs do not know when they should expect, or begin to monitor for, the access bursts from the mobile station. This has the following disadvantages. The sensitivity of conventional time of arrival measurement algorithms decreases as the uncertainty in the a priori knowledge of the arrival time increases. This is due to the fact that more noise and interference is received if the receiver does not knowwhen the "meaningful" data is coming. Also, the TMU must monitor for a longtime in orderto be sure that it captures the desired bursts. Thus, the utilization efficiency of the TMU hardware is disadvantageously degraded.

Furthermore, in a frequency hopping system such as GSM, the access bursts are transmitted on a frequency hopped channel. In this situation, not only does the TMU not know when to begin monitoring for the access bursts, but it also does not know which frequency it should monitor. Thus, not only is an undesirably long monitoring time possible, but the TMU would also be required to include a receiver for each frequency in the hop sequence so that all possible frequencies could be monitored.

It is therefore desirable to provide time of arrival measuring devices with information indicative ofwhen the access bursts can be expected to arrive, and which frequency will be used to transmit the access bursts. According to the present invention, such information is provided to time of arrival measuring devices, thereby avoiding the aforementioned problems associated with conventional time of arrival techniques.

Also, for positioning purposes, time of arrival measurements are sometimes performed on radio links having a signal-to-noise and interference ratio (SN **IR**) far below zero. Especially indoors and in rural environments, sensitivity can become a problem. Also, the TMUs that will perform the time of arrival measurements must be selected before the actual measurements are performed, when no information on SN IR is available. Thus, it is unavoidable that the radio links between at least some of the selected TMUs and the selected mobile unit will have a very poor SNR. Prediction simulators indicate that every dB that can be won in the measurement is valuable. This is especially true with respect to TMUs implemented without antenna diversity, in which case several dB are lost. Thisof course degrades the system performance significantly.

WO 99/09778 describes a Time Difference of Arrival method for determining the position of a mobile radio terminal within an associated mobile radio system, which method is based on Time of Arrival (TOA) measurements. A plurality of measuring devices is provided, which are synchronized in otherwise unsynchronized radio base stations. The measuring devices measure the TOA on demand in one or more radio base stations.

WO 95/26510 describes a position determination method for use with an analogue cellular system. A synchronized signal is generated at each base station of a mobile communication system. The mobile unit transmits a signal tone, and each base station compares the phase of the signal tone to the common phase of the synchronized signal to produce a phase offset. Based on the phase offset, distances from the base station are calculated, and using an intersection of the distances, the location of the mobile unit is determined.

US-5,327,144 describes a cellular telephone location system for automatically recording the location of one or more cellular telephones.

DE 44 09 178 A1 describes a method for determining the position of mobile stations in a mobile radio system. The method measures the distance between a mobile station and a plurality of base stations by determining the propagation time and/or the received field strength and/or the transmission quality between the mobile station and the base station.

It is therefore desirable to provide the TMUs with enhanced sensitivity to the signaling from the mobile unit. This is achieved according to the present invention by providing the TMUs with information from which the TMUs can determ ine in advance certain encrypted bits in the uplink access burst that will be transmitted by the mobile unit.

### BRIEF DESCRIPTION OF THE DRAWINGS

FIGURE 1 is a block diagram of an exemplary wireless communication system including uplink time of arrival capability according to the present invention.
FIGURE 2 illustrates an example of the mobile location center of FIGURE 1 in greater detail.
FIGURE 3 illustrates an example of the TOA measurement units of FIGURE 1 in greater detail.
FIGURE 4 is a flow diagram which illustrates example operations of the structure of FIGURES 1-3 to implement uplink time of arrival techniques according to the present invention.
FIGURE 5 illustrates how an example monitoring window is determined according to the invention.
FIGURE 6 illustrates another example of the mobile location center of FIGURE 1.
FIGURE 7 illustrates another example ofthe TOA measurement units of FIGURE 1.
FIGURE 8 is a flow diagram which illustrates example operations of the structure of FIGURES 1,6 and 7 to implement uplink time of arrival techniques according to the present invention.
FIGURE 9 illustrates sensitivity enhancement achieved by the invention in the TMUs of FIGURE 1.

### DETAILED DESCRIPTION

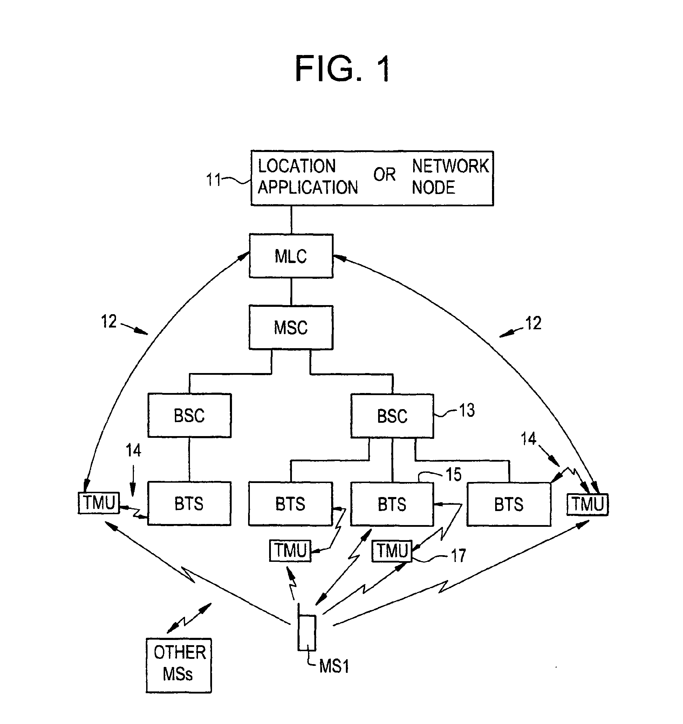

FIGURE 1 illustrates one example of a pertinent portion of a wireless communication system including the uplink time of arrival capability according to the present invention. The invention is implemented in a GSM network in the example of FIGURE 1. As shown in FIGURE 1, a GSM mobile switching center MSC is coupled for communication with a plurality ofGSM base station controllers BSCs, which are in turn coupled to communicate with one or more GSM base transceiver stations BTSs. The base transceiver stations are capable of radio communication with a plurality of mobile stations MSsviatheairinterface. Communication from theMSC to the MSs via the BSCs and the BTSs is well known in the art.

FIGURE 1 also includes time of arrival measurement units TMUs which communicate with respective base transceiver stations via radio signaling through the air interface. A mobile location center MLC is coupled to communicate with the mobile switching center MSC using conventional GSM signaling protocol. In FIGURE 1, the MLC can receive a request to locate the position of a mobile station MS1. Such a request can be received from a node within the network itself, orfrom an external location application as illustrated at 11 in FIGURE 1. In response to this request, the MLC interrogates the MSC to thereby determine the serving BTS 15 (i.e., the serving GSM cell) and to receive from the serving BSC 13 (via MSC) all available physical channel parameters associated with the serving cell, including all frequency hopping parameters. The MLC decides which TMUs should be involved in the uplink time of arrival measurements, and initiates a conventional intracell handover command (via MSC and BSC 13), which intracell handover command is then to be transmitted to the mobile station MS1 by BTS 15.

The intracell handover command in GSM includes starting frame and time slot information which directs the mobile station to begin the conventional access burst (responsive to the intracell handover command) at a specified TDMA time slot in a specified TDMA frame. When initiating the intracell handover command via communication with BSC 13, the MLC either specifies to BSC 13 the frame number and time slot number, or receives from BSC 13 the frame number and time slot number that have been specified by BSC 13.

Communications between the MLC and the TMUs can occur, for example, via cable connections between the MLC and the TMUs (see, e.g.,12 in FIGURE 1), or via the air interface between the TMUs and BTSs (see, e.g., 14 in FIGURE 1) and the network communication path from BTS through BSC and MSC to MLC.

The TMUs periodically monitor the broadcast control channels of the respective base transceiver stations with which they communicate. Each TMU provides the MLC with the frame structure timing of its associated BTS relative to the TMU's own local time reference. This frame structure timing information can be transmitted from the TMUs to the MLC via, for example, conventional Short Message Service utilizing the air interface between the TMU and the MLC. This frame structure timing information can be updated periodically by the TMUs and sent to MLC periodically. Thus, when the MLC initiates the intracell handover command, which specifies the frame number and time slot number for the access burst from the mobile station, the MLC also knows the frame structure timing currently used by the mobile station MS 1 in communication with its serving base transceiver station 15.

Moreover, the MLC also knows any inter-TMU timing differences (ITTDs) among the TMUs selected to make the uplink time of arrival measurements on the mobile station MS1. As described above in detail, the TMUs can all include a conventional absolute time reference, or the MLC can calculate the inter-TMU time differences among the TMUs using uplink time of arrival measurements made by the TMUs on a stationary reference mobile station located in a known position. The MLC can therefore determine the frame structure timing according to the local time reference of any TMU by simply translating the frame structure timing measurement from the local timing of the TMU that made the frame structure tim ing measurement (TMU 17 in the example of FIGURE 1) to the local timing of any of the TMUs selected to make TOA measurements on MS 1. Thus, when the MLC requests an intracell handover command specifying a frame number and time slot number of the access burst, the MLC can also communicate to the selected TMUs the frame number, the time slot number and the frame structure timing ofthe serving BTS (and thus the mobile station also) relative to the local timingof each respectiveTMU. Now, each TMU will know, relative to its own local timing reference, precisely when the mobile station will begin transmitting the first access burst.

In addition, the mobile location center can request from the base station controller 13 the conventional hopping sequence parameters associated with the serving base transceiver station 15. These parameters can also be transmitted from MLC to the TMUs along with the frame number, time slot number and frame structure timing. With knowledge ofthe conventional hopping sequence parameters and the frame and time slot numbers, the TMUs can then calculate the hopping sequence in conventional fashion. Thus, the TMUs will all know when (frame and time slot numbers), and on which frequency, to begin monitoring for the arrival of the access burst from the mobile station.

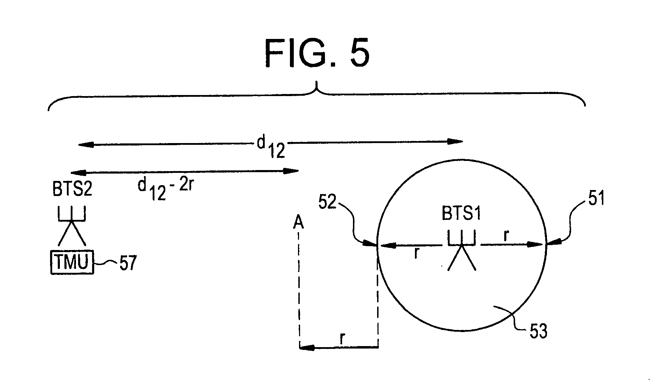

TheMLC may also compute a monitorwindowbeginning at the starting time as specified by the frame number and time slot number in the intracell handover command, and extending for a time period determined as shown in the example of FIGURE 5. FIGURE 5 illustrates one example of how monitoring windows can be established for the TMUs of FIGURE 1. The example of FIGURE 5 illustrates determination of amonitoringwindow for a TMU 57 that is substantially cosited with a base transceiver station designated as BTS2. The TMU illustrated in FIGURE 5 will make time of arrival measurements on bursts received from a mobile station currently being served by the base transceiver station designated as BTS 1. In this situation, the longest transmission time before the burst arrives at the TMU will occur when the mobile station is located at 51, namely on the boundary of serving cell 53 opposite the TMU 57. IfT0 designates the starting time of the access burst (as defined by the frame number and time slot number received by the mobile station in the intracell handover command), then the access burst from the mobile station will actually arrive at BTS1 at the starting time T0 due to the fact that the mobile station is synchronized to the serving BTS1. This operation is conventional in, for example, GSM systems.

Due to the aforementioned synchronization, the access burst will have already arrived at BTS1 at time T0, so the total transmission time to the TMU will be T0+d₁₂/c, where d₁₂ is the distance between BTS I and the TMU 57, and c is the speed of light. On the other hand, the shortest transmission time between the mobile station and the TMU will occur when the mobile station is located at 52, namely on the cell boundary of cell 53 nearest to the TMU. With the mobile station located at 52, the access burst will have reached point A at time T0, so that the total transmission time to the TMU will be given by T0 + (d₁₂- 2r)/c, where r is the radius of the serving cell 53. Thus, the monitoring window for the TMU 57 of FIGURE 5 would begin at time T0 + (d₁₂ - 2r)/c, and would extend until time T0+d₁₂/c. This monitoring window is easily calculated by theMLC which has stored therein or available thereto the cell radius information of all cells covered by the MLC, and either the distances between all base transceiver stations (in the case of TMUs cosited with the base transcei ver stations) or the geographic coordinates of all base transceiver stations and all TMUs (to accommodate architectures wherein the TMUs are not necessarily cosited with base transceiver stations).

Rather than using the cell radius rto calculate the search window, the MLC could alternatively use the current Timing Advance (TA) value, which is conventionally available from the serving BTS. The TA value gives a rough estimate of the distance between the mobile station and the serving BTS. Because the TA value will correspond to a distance less than or equal to the cell radius r, use of the TA value can often reduce the search window by locating the beginning pointofthe window later in time than it would be if the cell radius r were used.

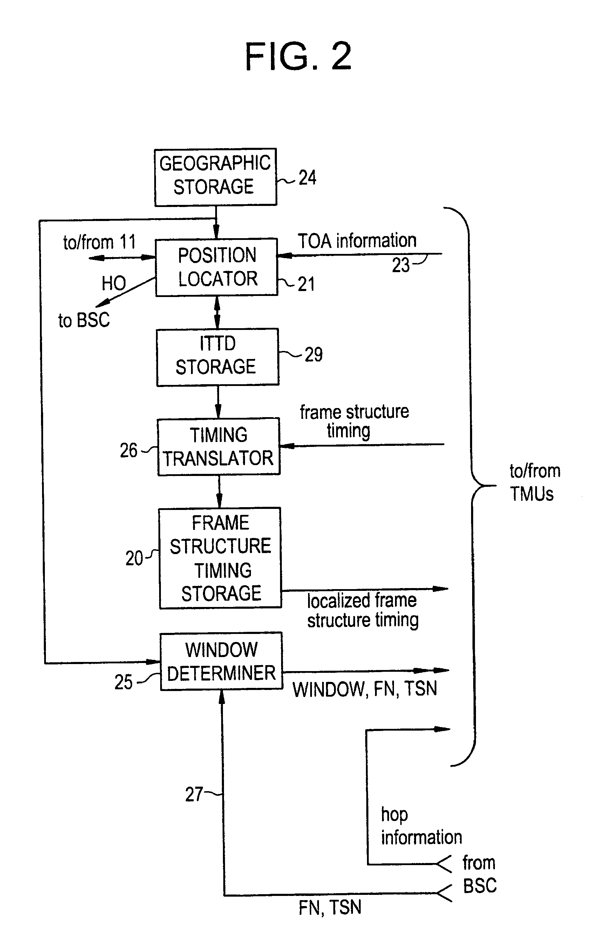

FIGURE 2 illustrates one example ofthe mobile location center MLC of FIGURE 1 in greater detail. In the example of FIGURE 2, the MLC includes a position locator 21 which receives the location requests from the location application or network mode at 11 in FIGURE 1. The position locator is coupled to a geographic storage portion 24 for storing therein, for example, the geographic coordinates ofthe TMUs, the geographic coordinates of the base transceiver stations, and the cell radius of each cell covered by the MLC (or current TA value of any mobile station that is being located). The position locator includes an input 23 where time of arrival information (and associated reliability estimate) from the TMUs is received. The position locator 21 implements well-known time difference of arrival techniques in response to the time of arrival information.

For example, position locator 21 can operate to solve the equation OTD = GTD + ITTD where OTD is the observed time difference (difference between TMU-measured times of arrival), GTD is geographic time difference (difference between times of arrival in absolute time). Thus, the observed time differences differ from the geographic time differences due to ITTD as described above. When MLC is locating a mobile station, OTD and ITTD are known, so the equation is solved for GTD, and when MLC is determining the ITTDs using a stationary reference mobile, OTD and GTD are known, so ITTD can be calculated. When the position of the mobile station has been located by the position locator, the position locator outputs the position location information to the requesting node (network or external) from which the original location request was received. Position locator 21 can determine the ITTDs from time of arrival measurements made by TMUs on a stationary reference mobile station. The ITTDs are stored in storage portion 29.

The position locator also outputs an intracell handover request (HO) to BSC, in which the position locator can specify the desired starting frame and time slot numbers.

The MLC further includes a window determiner 25 which determines the monitoring window for each TMU, for example, in the manner described above with respect to FIGURE 5 The window determiner has an input 27 for receiving the starting time (frame number FN and time slot number TSN) from the BSC 13 (via MSC). Window determiner 25 is also coupled to geographic storage portion 24 to permit access to geographic location information needed to compute the monitoring windows. A timing translator 26 receives frame structure timing information for each BTS from the associated TMU assigned to measure that BTS, and uses the ITTDs stored at 29 to translate the frame structure timing information into the timing reference of every other TMU. Frame structure timing information for every BTS relative to every TMU's local timing reference is stored in storage portion 20.

The MLC includes a further input for receiving the hopping sequence information from the BSC 13(via MSC). The MLC provides as output a positioning measurement command to the selected TMUs (via MSC, BSC and BTS), the command including (1) monitoring window information and the frame number FN and time slot number TSN from window determiner25, (2) hopping sequence information as received at MLC from BSC, and (3) localized frame structure timing from storage portion 20.

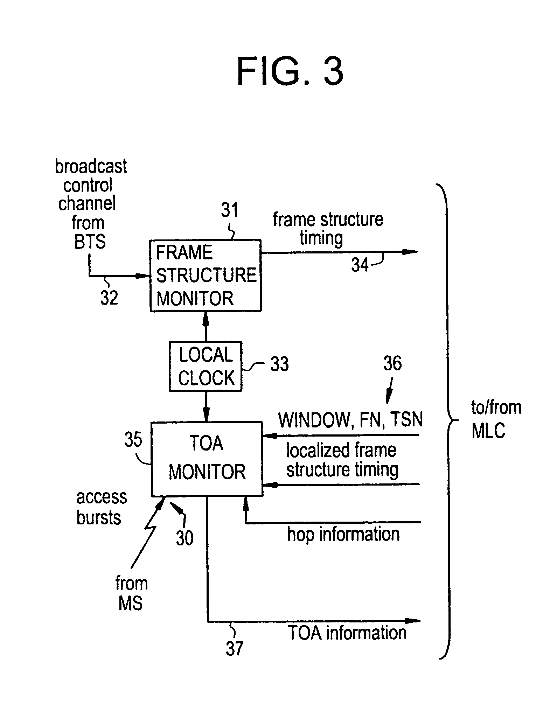

FIGURE3 illustrates an example embodiment of the TMUs of FIGURE 1. The TMU of FIGURE 3 includes a frame structure monitor 31 including an input 32 for monitoring the broad cast control channel (or other channel suitable for determining frame structure timing) of the associated base transceiver station of FIGURE 1, and an output 34 for providing the frame structure timing information to the MLC (via BTS, BSC and MSC). The frame structure monitor receives its timing from the TMU's local clock 33. As discussed above, the frame structure monitor receives the broadcast control channel ofthe associated BTS and determines the frame structure timing of the BTS relative to the TMU's local clock. This frame structure timing information is then transmitted to the MLC at 34.

The TMU of FIGURE 3 further includes a time of arrival monitor 3 5 which includes an input 30 for receiving the access bursts from a mobile station, and a further input 36 for receiving the positioning measurement command information provided by MLC as described above. The time of arrival monitor also includes an output 37 for providing time of arrival information (and associated reliability estimates) to the MLC. The time of arrival monitor 35 can monitor the input 30 for access bursts during the window as defined by the received window information. The window information and starting frame and time slot numbers (FN and TSN) are interpreted by the TOA monitor 35 in conjunction with the localized frame structure timing information, so the monitoringwindow is properly adjusted to the local clock timing of the TMU.

The time of arrival monitor also uses the hopping sequence information, in conj unction with the starting frame and time slot numbers to compute the hopping sequence used by the mobile station and its serving base transceiver station. Such computation of a frequency hopping sequence is a well known conventional procedure. Thus, the TMU will advantageously monitor the access bursts on the correct frequency and during a limited window of time which includes the arrival time of the access bursts. The window is of course easily re-used to measure subsequent access bursts in the (potentially) 70 burst sequence. Even without receiving the window information, the monitor would still know the burst starting time from FN, TSN and the localized frame structure timing, and thus could alternatively monitor for a predetermined default window time beginning at the known starting time.

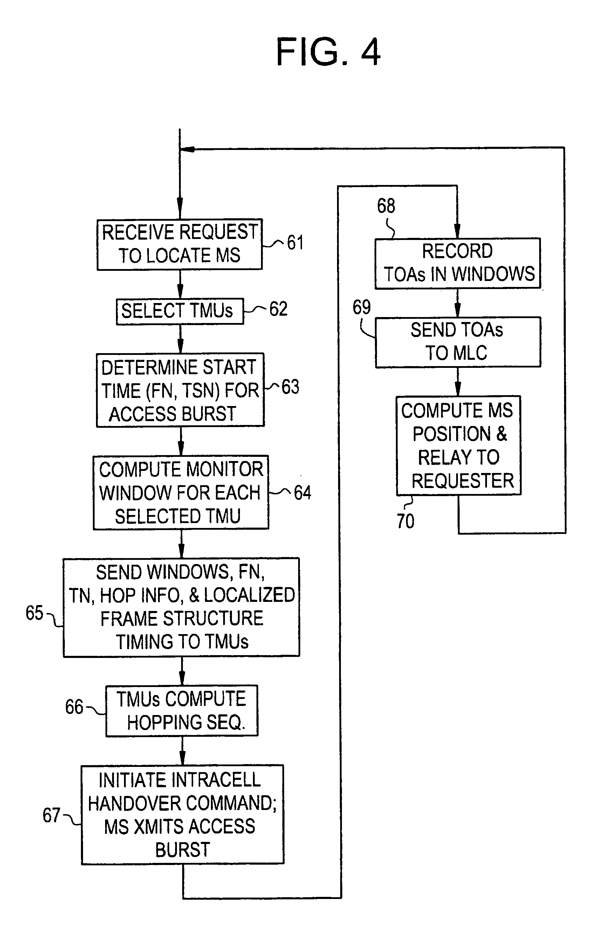

FIGURE 4 illustrates exemplary operations of the wireless communication system portion of FIGURE 1, including the uplink time of arrival techniques of the present invention. At 61, the MLC receives a request to locate the position of a particular mobile station. At 62, the MLC determines the serving cell, obtains transmission parameters of the mobile station (including hopping sequence parameters), and selects which TMUs should be involved in the time of arrival measurement. At 63, the starting frame number and time slot number for the first access burst is specified, either by MLC or from B SC. At 64, the MLC computes the monitoring window for each selected TMU. At 65, the MLC sends the monitoringwindows and hopping sequence information to the selected TMUs along with the starting frame and time slot numbers and the localized frame structure timing information. At 66, the selected TMUs compute the hopping sequence. At 67, the intracell handover commend is sent to the mobile station, and the mobile station transmits the access burst in response thereto. At 68, the TMUs record the time of arrival of the access burst within their respective monitoring windows. At 69, the TMUs send the time of arrival information to the MLC. At 70, the M LC computes the position of the mobile station and relays the position information to the requesting node.

As mentioned above, the MLC receives from each TMU the frame structure timing ofthe associated BTS relative to the TMU's own local timereference. This information, when combined with conventional downlink time of arrival measurements made on BTSs by a stationary reference mobile station, permits the MLC to calculate the ITTDs. If the reference mobile station makes time of arrival measurements on two BTSs, for example, by monitoring the broadcast control channel of each BTS, then the MLC can receive this information (e.g., via BTS, BSC and MSC) and calculate the timing difference between the BTSs. Because the MLC also knows thetimingofeach BTS's broadcast control channel frame structure relative to the associated TMU, the MLC can easily calculate the ITTD between the two TMUs associated with the two BTSs measured by the reference mobile station. This technique for determining the ITTDs according to the present invention advantageously permits the reference mobile station simply to monitor existing downlink signals from the BTSs, rather than transmit uplink signals to be measured by the TMUs, thus requiring no additional traffic in the network for performing ITTD determinations.

The intracell handover command in GSM conventionally includes a Handover Reference Number (HRN) associated with the particular handover. When initiating the intracell handover command via communication with BSC 13, the MLC can receive from BSC 13 the BSIC of the BTS that is the intended handover target and the Handover Reference Number that has been specified for the handover by BSC 13. The MLC can then communicate to the selected TMUs the BSIC and the Handover Reference Number.

The BSIC and the Handover Reference Number are used in GSM to produce 36 encrypted bits that are included along with a 41 bit training sequence in the conventional access bursts transmitted by the mobile station. Thus, when the TMUs are provided with the BSIC (6 bits) and theHRN (8 bits), the TMUs can utilize a well known algorithm in the GSM standard to produce from the BSIC and HRN bits the 36 encrypted bits of the access burst (see e.g., Draft prETS 300 575 (GSM 05.03 version 4.5.0); July 1997, page 23).

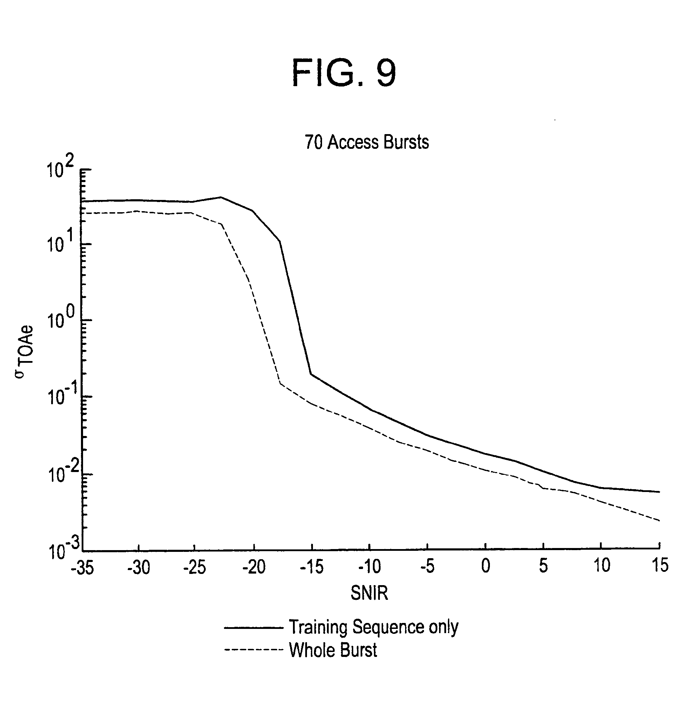

By knowing all 77 information bits (36 encrypted bits plus 41 known training bits) of the access burst in advance, rather than knowing only the 41 bit training sequence as in the prior art, the sensitivity at the TMUs is directly enhanced, as shown by the simulation example of FIGURE 9. In FIGURE 9, the horizontal axis corresponds to SNIR and the vertical axis corresponds to the standard deviation of the time of arrival estimate, σ_{TOAE}. Knowledge of the additional 36 bits permits the TMUs to achieve, in a far noisier environment, the same accuracy as could be achieved using only the 41 training bits in a less noisy environment. This enhances the time of arrival measurements made by the TMUs, reduces the risk of measurement errors, and reduces the time required to make the necessary measurements.

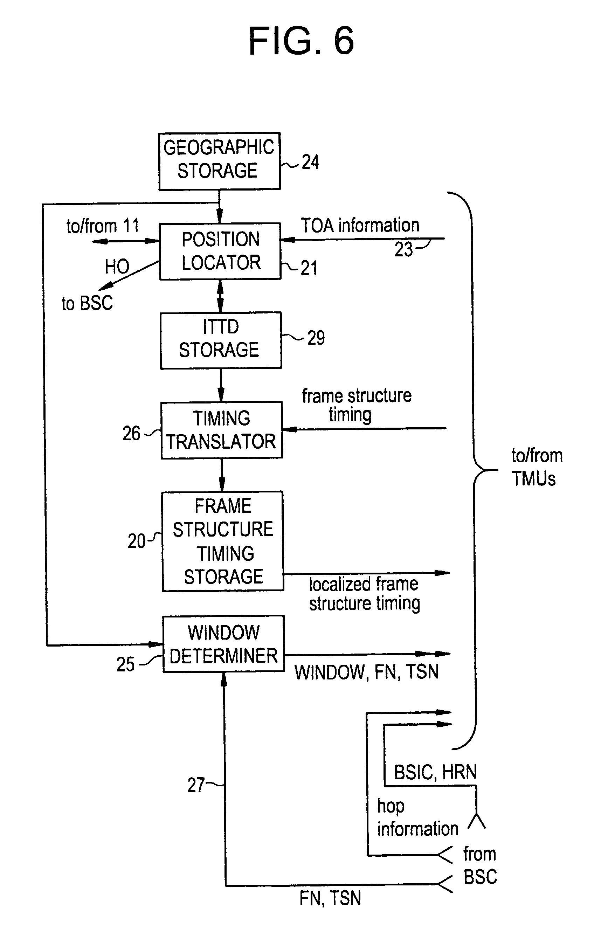

FIGURE 6 is similar to FIGURE 2 but shows an MLC receiving the BSIC and HRN from the BSC, and also shows the MLC transmitting the BSIC and HRN to the TMUs.

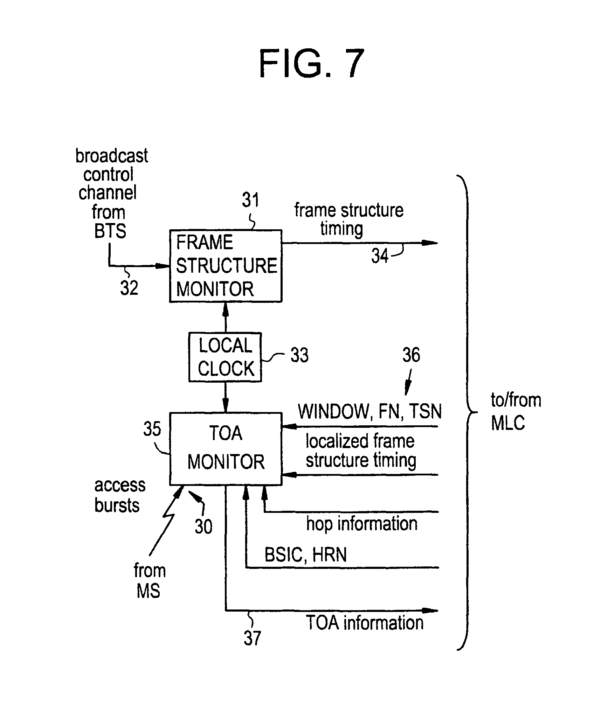

FIGURE7 is similar to FIGURE3, but shows a TOA monitor 3 5A receiving the BSIC and HRN as inputs from MLC.

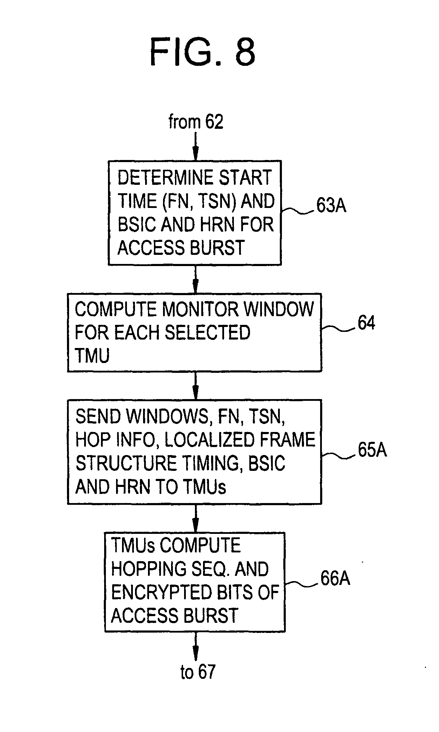

FIGURE 8 illustrates an example modification of the operations of FIGURE 4 to include the above-described use of the B SIC and HRN, In particular, blocks 63, 65 and 66 from FIGURE 4 are shown modified at 63A, 65A and 66A, respectively, to illustrate the use of the BSIC and HRN. In particular, at 63A, the BSC specifies the BSIC and HRN in addition to the other information illustrated at 63 in FIGURE 4. At65A, the MLC sends the BSIC and HRN to the selected TMUs along with the additional information illustrated at 65 in FIGURE 4. At 66A, the TMUs compute the encrypted bits of the access bursts in addition to computing the hopping sequence illustrated at 66 in FIGURE 4. In the example of FIGURE 8, operations other than at 63A, 65A and 66A in FIGURE 8 can be the same as disclosed in FIGURE 4.

It should be understood that the above-described use of BSIC and HRN to compute encrypted bits can be implemented together with or separately from the above-described use of monitor windows, burst starting times and frequency hopping calculations,

Although exemplary embodi m ents of the present invention have b een described above in detail, the scope of protection is defined by the terms of the claims.

## Claims

1. A method of using a time of arrival measurement apparatus (17)to measure the time of arrival of a radio signal transmitted by a mobile communication station (MS1) operating in a wireless mobile communication network, comprising:
providing the time of arrival measurement apparatus (17) with information indicative of a predetermined point in time at which the radio signal is to be transmitted; and
using the time of arrival measurement apparatus (17) to monitor for arrival of the radio signal only during a period of time after said predetermined point in time.

2. The method of Claim 1, wherein said providing step includes expressing the predetermined point in time relative to a time base of the time of arrival measurement apparatus (17).

3. The method of Clam 2, including determining a relative timing relationship between the predetermined point in time and the time base of the time of arrival measurement apparatus (17).

4. The method of Claim 3, wherein said determining step includes monitoring a radio communication channel used by the mobile station (MS 1) and determining therefrom a relationship between communication timing of the mobile station (MS 1) and the time base of the time of arrival measurement apparatus (17).

5. The method of Claim 4, wherein the radio communication channel is a control channel (32) of a fixed-site transceiver (BTS)serving the mobile station (MS 1), and the communication timing (34) is frame structure timing of the fixed-site transceiver (BTS).

6. The method of Claim 1, including specifying the information to a node in the network, and thereafter communicating the information from the node to the mobile station (MS1).

7. The method of Claim 1, including communicating the information from a node in the network to the mobile station (MS1), and also communicating the information from the node in the network to a further node in the network that performs said providing step.

8. The method of Claim 1, including calculating the period of time based on the information indicative of the predetermined point in time and based on geographic characteristics of the network (24), the period of time including a predetermined beginning point in time and a predetermined ending point in time, and providing to the time of arrival measurement apparatus (17) information indicative of the period of time.

9. The method of Claim 8, wherein the beginning point in time of said period of time is separated by a further period of time from the predetermined point in time at which the radio signal is to be transmitted.

10. The method of Claim 1, including providing to the time of arrival measurement apparatus (17) information indicative of a frequency at which the radio signal is to be transmitted, and using the time of arrival measurement apparatus (17) to monitor the frequency for arrival of the radio signal.

11. The method of Claim 10, wherein the information indicative of the frequency at which the radio signal is to be transmitted includes the information indicative of the predetermined point in time at which the radio signal is to be transmitted, along with further information indicative of frequency hopping parameters used by the mobile station (MS 1), and including determining the frequency based on the information indicative of frequency hopping parameters and the information indicative of the predetermined point in time at which the radio signal is to be transmitted.

12. The method of Claim 1, wherein said providing step includes providing the information to a plurality of time of arrival measurement apparatuses (17), and wherein the information provided to each time of arrival measurement apparatus expresses the predetermined point in time relative to a time base of that particular time of arrival measurement apparatus (17).

13. The method of Claim 12, including receiving from a first time of arrival measurement apparatus (17) information indicative of a timing relationship between a time base of the first time of arrival measurement apparatus (17) and communication timing used by the mobile station (MS1), and determining from the timing relationship a plurality of other timing relationships between the communication timing used by the mobile station (MS1) and the respective time bases of the other time of arrival measurement apparatuses (17).

14. The method of Claim 13, including determining differences among the time bases of the respective time of arrival measurement apparatuses (17).

15. The method of Claim 1, wherein the wireless communication network is a GSM network.

16. An apparatus for use in locating a mobile station (MS1)in a wireless communication network, comprising:
a plurality of time of arrival monitors, (17) each said time of arrival monitor (17) for monitoring an air interface to determine when a radio signal (30) transmitted by the mobile station (MS1) has arrived at said time of arrival monitor (17);
each said time of arrival monitor (17) including an input (36) for receiving first information indicative of a predetermined point in time at which the mobile station(MS1) is to transmit the radio signal (30), wherein said first information received at each time of arrival monitor (17) expresses said predetermined point in time with respect to a local time base associated with that particular time of arrival monitor (17) ; and
each said time of arrival monitor (17) including an output (37) for providing second information indicative of a time of arrival of the radio signal at that time of arrival monitor (17).

17. The apparatus of Claim 16, wherein each said time of arrival monitor (17) includes an input for receiving third information indicative of frequency hopping parameters used by the mobile station (MS1).

18. The apparatus of Claim 17, wherein each said time of arrival monitor (17) is responsive to said first information and said third information for calculating a frequency at which the radio signal will be transmitted by the mobile station, and each said time of arrival monitor (17) is operable to monitor the calculated frequency for arrival of the radio signal (30).

19. The apparatus of Claim 16, wherein each said time of arrival monitor (30) includes an input (36) for receiving second information indicativeofa period of time during which said time of arrival monitor (17) is to monitor the air interface for arrival of the radio signal (30), wherein said period of time is separated from said predetermined point in time by a further period of time.

20. The apparatus of Claim 16, including a plurality of timing monitors (31) respectively associated with said time of arrival monitors (17), each of said timing monitors (31) coupled to the air interface for monitoring a radio channel (32) used by the mobile station (MS1) and determining therefrom a timing relationship between communication timing used by the mobile station (MS 1) and the local time base (33) of the associated time of arrival monitor (17), each of said timing monitors (31) including an output (34) for outputting third information indicative of said timing relationship.

21. The apparatus of Claim 20, wherein the radio communication channel is a control channel of a fixed-site transceiver (BTS) serving the mobile station (MS1), and the communication timing is frame structure timing (34) of the fixed-site transceiver (BTS).

22. The apparatus of Claim 16, wherein the wireless communication network is a GSM network.

23. The method of claim 1, including providing to the time of arrival measurement apparatus (17) information (BSIC, HRN) from which an informational content of the radio signal can be determined but which information does not itself reveal the informational content of the radio signal, and the time of arrival measurement apparatus determining the informational content of the radio signal in response to the information, and the time of arrival measurement apparatus using the informational content to measure the time of arrival of the signal.

24. The apparatus of claim 16, wherein each said time of arrival monitor (17) includes an input for receiving fourth information (BSIC, HRN) from which an informational content of the radio signal can be determined but which information does not itself reveal the informational content of the radio signal.

25. The apparatus of claim 24, wherein each said time of arrival monitor (17) is responsive to said fourth information (BSIC, HRN) for determining the informational content of the radio signal and for using the informational content of the radio signal to measure the time of arrival of the radio signal at that time of arrival monitor (17).

## Patentansprüche

1. Verfahren zur Verwendung einer Ankunftszeit-Messvorrichtung (17) zum Messen der Ankunftszeit eines Funksignals, gesendet von einer Mobilkommunikationsstation (MS1), die in einem drahtlosen Mobilkommunikationsnetz funktioniert, umfassend:
der Ankunftszeit-Messvorrichtung (17) Information bereitstellen die einen vorbestimmten Zeitpunkt aufzeigt, an dem das Funksignal gesendet werden soll; und
Verwenden der Ankunftszeit-Messvorrichtung (17) zum Überwachen der Ankunft des Funksignals ausschließlich während einer Zeitperiode nach dem vorbestimmten Zeitpunkt.

2. Verfahren nach Anspruch 1. worin der Bereitstellungsschritt beinhaltet, dass der vorbestimmte Zeitpunkt relativ zu einer Zeitbasis der Ankunftszeit-Messvorrichtung (17) ausgedrückt wird.

3. Verfahren nach Anspruch 2, das Bestimmen eines relativen Timing-Verhältnisses zwischen dem vorbestimmten Zeitpunkt und der Zeitbasis der Ankunftszeit-Messvorrichtung (17) umfassend.

4. Verfahren nach Anspruch 3. worin der Bestimmungsschritt beinhaltet, dass ein von der Mobilstation (MS1) benutzter Funkkommunikationskanal überwacht wird und daraus ein Verhältnis zwischen dem Kommunikations-Timing der Mobilstation (MS1) und der Zeitbasis der Ankunftszeit-Messvorrichtung (17) bestimmt wird.

5. Verfahren nach Anspruch 4. worin der Funkkommunikationskanal ein Steuerkanal (32) eines die Mobilstation (MS1) bedienenden ortsfesten Sender-Empfängers (BTS) ist und das Kommunikations-Timing (34) ein Rahmenstruktur-Timing des ortsfesten Sender-Empfängers (BTS) ist.

6. Verfahren nach Anspruch 1, das Spezifizieren der Information an einen Netzknoten und danach das Kommunizieren der Information vom Knoten an die Mobilstation (MS1) umfassend.

7. Verfahren nach Anspruch 1, das Kommunizieren der Information von einem Netzknoten an die Mobilstation (MS1) und auch das Kommunizieren der Information vom Netzknoten an einen weiteren Netzknoten umfassend, der den Bereitstellungsschritt ausführt.

8. Verfahren nach Anspruch 1, das Berechnen der Zeitperiode umfassend auf der Basis der Information, die den vorbestimmten Zeitpunkt aufzeigt, und auf der Basis von geographischen Kenndaten des Netzes (24), wobei die Zeitperiode einen vorbestimmten Anfangszeitpunkt und einen vorbestimmten Endzeitpunkt enthält, und der Ankunftszeit-Messvorrichtung (17) Information bereitgestellt wird, die die Zeitperiode aufzeigt.

9. Verfahren nach Anspruch 8. worin der Anfangszeitpunkt der Zeitperiode durch eine weitere Zeitperiode vom vorbestimmten Zeitpunkt getrennt ist, an dem das Funksignal gesendet werden soll.

10. Verfahren nach Anspruch 1. das Bereitstellen von Information an die Ankunftszeit-Messvorrichtung (17) umfassend, wobei die Information eine Frequenz aufzeigt, auf der das Funksignal gesendet werden soll, und das Verwenden der Ankunftszeit-Messvorrichtung (17), um die Frequenz auf die Ankunft des Funksignals zu überwachen.

11. Verfahren nach Anspruch 10. worin die Information, die die Frequenz aufzeigt, auf der das Funksignal gesendet werden soll, die Information umfasst, die den vorbestimmten Zeitpunkt aufzeigt, zu dem das Funksignal gesendet werden soll zusammen mit weiterer Information, die von der Mobilstation (MS1) benutzte Frequenzsprungparameter aufzeigt, und die Bestimmung der Frequenz umfassend auf der Basis der Information, die Frequenzsprungparameter aufzeigt, und der Information, die den vorbestimmten Zeitpunkt aufzeigt, zu dem das Funksignal gesendet werden soll.

12. Verfahren nach Anspruch 1, worin der Bereitstellungsschritt das Bereitstellen der Information an eine Vielzahl von Ankunftszeit-Messvorrichtungen (17) umfasst, und worin die an jede Ankunftszeit-Messvorrichtung (17) bereitgestellte Information den vorbestimmten Zeitpunkt relativ zu einer Zeitbasis dieser bestimmten Ankunftszeit-Messvowichtung (17) ausdrückt.

13. Verfahren nach Anspruch 12, das Empfangen von Information von einer ersten Ankunftszeit-Messvorrichtung (17) umfassend, wobei die Information ein Timing-Verhältnis zwischen einer Zeitbasis der ersten Ankunftszeit-Messvorrichtung (17) und dem von der Mobilstation (MS1) benutzten Kommunikations-Timing aufzeigt, und das Bestimmen aus dem Timing-Verhältnis von einer Vielzahl von anderen Timing-Verhältnissen zwischen dem von der Mobilstation (MS1) benutzten Kommunikations-Timing und den jeweiligen Zeitbasen der anderen Ankunftszeit-Messvorrichtungen (17) umfassend.

14. Verfahren nach Anspruch 13, das Bestimmen von Zeitunterschieden zwischen den Zeitbasen der jeweiligen Ankunftszeit-Messvorrichtungen (17) umfassend.

15. Verfahren nach Anspruch 1, worin das drahtlose Kommunikationsnetz ein GSM-Netz ist.

16. Vorrichtung zur Verwendung beim Orten einer Mobilstation (MS1) in einem drahtlosen Kommunikationsnetz, umfassend:
eine Vielzahl von Ankunftszeitmonitoren (17), jeder Ankunftszeitmonitor (17) zum Überwachen einer Luftschnittstelle, um zu bestimmen, wann ein von der Mobilstation (MS1) gesendetes Funksignal (30) am Ankunftszeitmonitor (17) angekommen ist:
wobei jeder Ankunftszeitmonitor (17) einen Eingang (36) zum Empfangen erster Information umfasst, die einen vorbestimmten Zeitpunkt aufzeigt, zu dem die Mobilstation (MS1) das Funksignal (30) senden soll, worin die von jedem Ankunftszeitmonitor (17) empfangene erste Information den vorbestimmten Zeitpunkt mit Bezug auf eine lokale Zeitbasis ausdrückt, die mit diesem bestimmten Ankunftszeitmonitor (17) assoziiert ist: und
wobei jeder Ankunftszeitmonitor (17) einen Ausgang (37) zum Bereitstellen von zweiter Information umfasst, die eine Ankunftszeit des Funksignals an diesem Ankunftszeitmonitor (17) aufzeigt.

17. Vorrichtung nach Anspruch 16, worin jeder Ankunftszeitmonitor (17) einen Eingang zum Empfangen von dritter Information umfasst, die von der Mobilstation (MS1) benutzte Frequenzsprungparameter aufzeigt.

18. Vorrichtung nach Anspruch 17, worin jeder Ankunftszeitmonitor (17) ansprechempfindlich ist für die erste Information und die dritte Information zum Berechnen einer Frequenz, auf der das Funksignal von der Mobilstation gesendet wird, und worin jeder Ankunftszeitmonitor (17) betriebsbereit ist zum Überwachen der für die Ankunft des Funksignals (30) berechneten Frequenz.

19. Vorrichtung nach Anspruch 16, worin jeder Ankunftszeitmonitor (17) einen Eingang (36) zum Empfang zweiter Information umfasst, die eine Zeitperiode aufzeigt, während der der Ankunftszeitmonitor (17) die Luftschnittstelle auf die Ankunft des Funksignals (30) überwachen soll, wobei die Zeitperiode durch eine weitere Zeitperiode vom vorbestimmten Zeitpunkt getrennt ist.

20. Vorrichtung nach Anspruch 16, eine Vielzahl von Timing-Monitoren (31) umfassend, die jeweils mit den Ankunftszeitmonitoren (17) assoziiert sind, wobei jeder der Timing-Monitoren (31) zum Überwachen eines von der Mobilstation (MS1) benutzten Funkkanals (32) an die Luftschnittstelle gekoppelt ist und um daraus ein Timing-Verhältnis zwischen dem von der Mobilstation (MS1) benutzten Kommunikations-Timing und der lokalen Zeitbasis (33) des assoziierten Ankunftszeitmonitors (17) zu bestimmen, wobei jeder der Timing-Monitoren (31) einen Ausgang (34) zum Ausgeben der dritten Information umfasst, die das Timing-Verhältnis aufzeigt.

21. Vorrichtung nach Anspruch 20, worin der Funkkommunikationskanal ein Steuerkanal eines ortsfesten Sender-Empfängers (BTS) ist, der die Mobilstation (MS1) bedient, und das Kommunikations-Timing ein Rahmenstruktur-Timing (34) des ortsfesten Sender-Empfängers (BTS) ist.

22. Vorrichtung nach Anspruch 16, worin das drahtlose Kommunikationsnetz ein GSM-Netz ist.

23. Verfahren nach Anspruch 1, das Bereitstellen von Information (BSIC, HRN) an die Ankunftszeit-Messvorrichtung (17) umfassend, wobei aus der Information ein Informationsgehalt des Funksignals bestimmt werden kann, aber diese Information den Informationsgehalt des Funksignals nicht selbst enthüllt, und die Ankunftszeit-Messvorrichtung als Antwort auf die Information den Informationsgehalt des Funksignals bestimmt, und die Ankunftszeit-Messvorrichtung den Informationsgehalt dazu benutzt, die Ankunftszeit des Signals zu messen.

24. Vorrichtung nach Anspruch 16, worin jeder Ankunftszeitmonitor (17) einen Eingang zum Empfangen einer vierten Information (BSIC, HRN) umfasst, aus der ein Informationsgehalt des Funksignals bestimmt werden kann, wobei diese Information jedoch den Informationsgehalt des Funksignals nicht selbst offenbart.

25. Vorrichtung nach Anspruch 24. worin jeder Ankunftszeitmonitor (17) für die vierte Information (BSIC, HRN) ansprechempfindlich ist zum Bestimmen des Informationsgehalts des Funksignals und zum Verwenden des Informationsgehalts des Funksignals, um die Ankunftszeit des Funksignals an diesem Ankunftszeitmonitor (17) zu messen.

## Revendications

1. Procédé d'utilisation d'un appareil de mesure de temps d'arrivée (17) pour mesurer le temps d'arrivée d'un signal radio émis par une station de communication mobile (MS1) fonctionnant dans un réseau de communication mobile sans fil, comprenant:
la fourniture à l'appareil de mesure de temps d'arrivée (17) d'informations indicatrices d'un instant prédéterminé auquel le signal radio est à émettre; et
l'utilisation de l'appareil de mesure de temps d'arrivée (17) pour contrôler l'arrivée du signal radio seulement pendant une période de temps après ledit instant prédéterminé.

2. Procédé selon la revendication 1, dans lequel ladite étape de fourniture comprend l'expression de l'instant prédéterminé par rapport à une base de temps de l'appareil de mesure de temps d'arrivée (17).

3. Procédé selon la revendication 2, comprenant la détermination d'une relation de temporisation relative entre l'instant prédéterminé et la base de temps de l'appareil de mesure de temps d'arrivée (17).

4. Procédé selon la revendication 3, dans lequel ladite étape de détermination comprend le contrôle d'un canal de communication radio utilisé par la station mobile (MS1) et la détermination à partir de celle-ci d'une relation entre l'instant de communication de la station mobile (MS1) et la base de temps de l'appareil de mesure de temps d'arrivée (17).

5. Procédé selon la revendication 4, dans lequel le canal de communication radio est un canal de commande (32) d'un émetteur récepteur à emplacement fixe (BTS) servant la station mobile (MS1), et la temporisation de communication (34) est une temporisation de structure de trame de l'émetteur-récepteur à emplacement fixe (BTS).

6. Procédé selon la revendication 1, comprenant la spécification des informations à un noeud dans le réseau, et ensuite communication des informations à partir du noeud à la station mobile (MS1).

7. Procédé selon la revendication 1, comprenant la communication des informations à partir d'un noeud dans le réseau à la station mobile (MS1), et communication aussi des informations à partir du noeud dans le réseau à un autre noeud dans le réseau qui réalise ladite étape de fourniture.

8. Procédé selon la revendication 1, comprenant le calcul de la période de temps sur la base des informations indicatrices de l'instant prédéterminé et sur la base des caractéristiques géographiques du réseau (24), la période de temps comprenant un instant de début prédéterminé et un instant de fin prédéterminé, et la fourniture à l'appareil de mesure de temps d'arrivée (17) des informations indicatrices de la période de temps.

9. Procédé selon la revendication 8, dans lequel l'instant de début de ladite période de temps est séparé par une autre période de temps de l'instant prédéterminé auquel le signal radio est à émettre.

10. Procédé selon la revendication 1, comprenant la fourniture à l'appareil de mesure de temps d'arrivée (17) des informations indicatrices d'une fréquence à laquelle le signal radio est à émettre, et l'utilisation de l'appareil de mesure de temps d'arrivée (17) pour rechercher sur la fréquence l'arrivée du signal radio.

11. Procédé selon la revendication 10. dans lequel les informations indicatrices de la fréquence à laquelle le signal radio est à émettre comprennent les informations indicatrices de l'instant prédéterminé auquel le signal radio est à émettre, ainsi que d'autres informations indicatrices des paramètres de saut de fréquence utilisés par la station mobile (MS1), et comprenant la détermination de la fréquence sur la base des informations indicatrices des paramètres de saut de fréquence et des informations indicatrices de l'instant prédéterminé auquel le signal radio est à émettre.

12. Procédé selon la revendication 1, dans lequel ladite étape de fourniture comprend la fourniture des informations à une pluralité d'appareils de mesure de temps d'arrivée (17), et dans lequel les informations fournies à chaque appareil de mesure de temps d'arrivée expriment l'instant prédéterminé par rapport à une base de temps de cet appareil de mesure de temps d'arrivée particulier (17).

13. Procédé selon la revendication 12, comprenant la réception à partir d'un premier appareil de mesure de temps d'arrivée (17) des informations indicatrices d'une relation de temporisation entre une base de temps du premier appareil de mesure de temps d'arrivée (17) et une temporisation de communication utilisée par la station mobile (MS1), et la détermination à partir de la relation de temporisation d'une pluralité d'autres relations de temporisation entre la temporisation de communication utilisée par la station mobile (MS1) et les bases de temps respectives des autres appareils de mesure de temps d'arrivée (17).

14. Procédé selon la revendication 13, comprenant la détermination des différences entre les bases de temps des appareils de mesure de temps d'arrivée respectifs (17).

15. Procédé selon la revendication 1, dans lequel le réseau de communication sans fil est un réseau GSM.

16. Appareil destiné à être utilisé dans la localisation d'une station mobile (MS1) dans un réseau de communication sans fil, comprenant:
une pluralité de moniteurs de temps d'arrivée, (17) chacun dudit moniteur de temps d'arrivée (17) pour contrôler une interface d'air pour déterminer lorsqu'un signal radio (30) émis par la station mobile (MS1) est arrivé sur ledit moniteur de temps d'arrivée (17);
chaque dit moniteur de temps d'arrivée (17) comprenant une entrée (36) pour recevoir des premières informations indicatrices d'un instant prédéterminé auquel la station mobile (MS1) doit émettre le signal radio (30), dans lequel lesdites premières informations reçues à chaque moniteur de temps d'arrivée (17) expriment ledit instant prédéterminé par rapport à une base de temps locale associée à ce moniteur de temps d'arrivée particulier (17); et
chaque dit moniteur de temps d'arrivée (17) comprenant une sortie (37) pour fournir des secondes informations indicatrices d'un temps d'arrivée du signal radio à ce moniteur de temps d'arrivée (17).

17. Appareil selon la revendication 16, dans lequel chaque moniteur de temps d'arrivée (17) comprend une entrée pour recevoir des troisièmes informations indicatrices des paramètres de saut de fréquence utilisés par la station mobile (MS1).

18. Appareil selon la revendication 17, dans lequel chaque dit moniteur de temps d'arrivée (17) est sensible auxdites premières informations et auxdites troisièmes informations pour calculer une fréquence à laquelle le signal radio sera émis par la station mobile, et chaque dit moniteur de temps d'arrivée (17) est utilisable pour rechercher sur la fréquence calculée l'arrivée du signal radio (30).

19. Appareil selon la revendication 16. dans lequel chaque dit moniteur de temps d'arrivée (30) comprend une entrée (36) pour recevoir des secondes informations indicatrices d'une période de temps pendant laquelle ledit moniteur de temps d'arrivée (17) doit rechercher sur l'interface d'air l'arrivée du signal radio (30), dans lequel ladite période de temps est séparée dudit instant prédéterminé par une autre période de temps.

20. Appareil selon la revendication 16, comprenant une pluralité de moniteurs de temporisation (31) respectivement associés auxdits moniteurs de temps d'arrivée (17), chacun desdits moniteurs de temporisation (31) couplé à l'interface d'air pour contrôler un canal radio (32) utilisé par la station mobile (MS1) et la détermination à partir de celle-ci d'une relation de temporisation entre une temporisation de communication utilisée par la station mobile (MS1) et la base de temps locale (33) du moniteur d'arrivée de temps associé (17), chacun desdits moniteurs de temporisation (31) comprenant une sortie (34) pour fournir des troisièmes informations indicatrices de ladite relation de temporisation.

21. Appareil selon la revendication 20, dans lequel le canal de communication radio est un canal de commande d'un émetteur-récepteur à emplacement fixe (BTS) servant la station mobile (MS1), et la temporisation de communication est la temporisation de structure de trame (34) de l'émetteur-récepteur à emplacement fixe (BTS).

22. Appareil selon la revendication 16, dans lequel le réseau de communication sans fil est un réseau GSM.

23. Procédé selon la revendication 1, comprenant la fourniture à l'appareil de mesure de temps d'arrivée (17) d'informations (BSIC, HRN) à partir desquelles un contenu informationnel du signal radio peut être déterminé mais lesquelles informations ne révèlent pas elles-mêmes le contenu informationnel du signal radio, et l'appareil de mesure de temps d'arrivée déterminant le contenu informationnel du signal radio en réponse aux informations, et l'appareil de mesure de temps d'arrivée utilisant le contenu informationnel pour mesurer le temps d'arrivée du signal.

24. Appareil selon la revendication 16. dans lequel chaque dit moniteur de temps d'arrivée (17) comprend une entrée pour recevoir des quatrièmes informations (BSIC, HRN) à partir desquelles un contenu informationnel du signal radio peut être déterminé mais lesquelles informations ne révèlent pas elles-mêmes le contenu informationnel du signal radio.

25. Appareil selon la revendication 24, dans lequel chaque dit moniteur de temps d'arrivée (17) est sensible auxdites quatrièmes informations (BSIC, HRN) pour déterminer le contenu informationnel du signal radio et pour utiliser le contenu informationnel du signal radio pour mesurer le temps d'arrivée du signal radio à ce moniteur de temps d'arrivée (17).
